# EUROPEAN PATENT APPLICATION

(11) **EP 2 725 351 A1**
(43) Date of publication of application: **30.04.2014**
(21) Application number: 12802378.5
(22) Date of filing: 09.04.2012
(51) Int. Cl.: G01N 27/62, G01N 30/72

(54) **LIQUID CHROMATOGRAPHY MASS SPECTROMETER DEVICE**

(30) Priority: 24.06.2011 JP 2011140134
(71) Applicant: Hitachi High-Technologies Corporation, Tokyo 105-8717 (JP)
(72) Inventor: YOSHIOKA Shinji, Minato-ku, Tokyo 105-8717 (JP); YASUDA Hiroyuki, Minato-ku, Tokyo 105-8717 (JP)
(74) Representative: Moore, Graeme Patrick
(86) International application number: PCT/JP2012/059690
(87) International publication number: WO 2012/176534

(57) **Abstract**

The purpose of the present invention is to provide a mass spectrometer with high detection sensitivity to generate fine charged droplets and thereby improve the efficiency of sample ionization, and to reduce large droplets with high ionic strength. The present invention includes: liquid chromatograph separating means that separates a sample solution into components; a sample sprayer that sprays as droplets the sample solution separated and eluted by the liquid chromatograph separating means; ion generating means that charges the droplets and generates ions; a mass spectrometer that receives the ions and performs mass spectrometry on the ions; and a desolvation unit that removes a solvent contained in the charged droplets, wherein the desolvation unit includes a desolvation flow path chamber through which the charged droplets pass, heating means for heating the desolvation flow path chamber, and a helical droplet flow path formed in the desolvation flow path chamber.

## Description

### Technical Field

The present invention relates to a liquid chromatograph mass spectrometer that ionizes droplets of a liquid sample supplied from a liquid chromatograph (LC) and introduces the ionized droplets into the mass spectrometer for mass spectrometry (MS).

### Background Art

In recent years, in the fields of environments, foods, medicine, and forensic medicine, mass spectrometers are widely used as a technique for acquiring qualitative/quantitative information about a trace amount (ppm to ppb order) of multicomponents with high sensitivity. However, if ionization methods used for mass spectrometers are applied for multicomponents, then ionization of target components is inhibited by interruption caused by an effect of impurities (multicomponents). It is, therefore, difficult to accurately perform qualitative/quantitative analysis in many cases.

Thus, prior to detection by the mass spectrometer, a chromatography separation device such as a liquid chromatography is connected to the system and accurate qualitative/quantitative analysis on each of components is performed after separation of a sample into components. Ionization generally used in the connection to the liquid chromatography is electro spray ionization (ESI) and atmospheric pressure chemical ionization (APCI). An electro spray ion source is used for ESI and an atmospheric pressure chemical ionization source is used for APCI. ESI and APCI each are a method that sprays a sample solution as droplets under atmospheric pressure and generates ions from the droplets. ESI and APCI are characterized in that generated ions thereby selectively have molecular weight information.

For the connection to the liquid chromatography, a flow rate of a mobile phase solvent that is generally used for the liquid chromatography is in a range of several hundreds of µL/min to several mL/min. When the sample solution eluted from the liquid chromatography is sprayed at a flow rate of several hundreds of µL/min to several mL/min, it is important that the sprayed sample solution be gasified as much as possible to generate ions efficiently.

A liquid chromatograph mass spectrometer that has an electro spray ion source using the electrospray ionization (ESI) that is generally used or an atmospheric pressure chemical ionization source using the atmospheric pressure chemical ionization (APCI) uses a liquid chromatograph to separate a mixed sample into each component and causes an ionizer to generate ions under atmospheric pressure.

After that, the ions pass through, for example, a first pore, are introduced into a mass spectrometry unit, and implements mass separation. Then, a detector detects the ionic strength which data processor displays as a mass spectrum and chromatographic data. A mass spectrometer used in the mass spectrometry unit includes a quadrupole mass spectrometer, an ion trap mass spectrometer, a tandem mass spectrometer, and a time-of-flight mass spectrometer.

For both the ionization of an electro spray ion source using the electrospray ionization (ESI) and an atmospheric pressure chemical ionization source using the atmospheric pressure chemical ionization (APCI), it is necessary to spray the sample solution eluted from the liquid chromatograph and enhance the efficiency of gasifying generated sample droplets, thereby improving the efficiency of the ionization.

In order to improve the efficiency of gasifying droplets of the sample solution sprayed from the liquid chromatography at the high flow rate, there is a method for spraying to the sample droplets dry gas such as N2 heated to promote the gasification of the sprayed droplets of the sample solution. In this case, in order to sufficiently gasify the droplets generated by the spraying from the sample solution, it is important that the droplets of the sample solution and the dry gas such as N2 be sufficiently stirred.

In order to improve the efficiency of the gasification in the aforementioned manner, there are a method for spraying a sample in a manner in which a sample sprayer of an ionizer has the same axis as an inlet for dry gas and a method in which a sample sprayer of an ionizer has an axis crossing an axis of an inlet for dry gas, as described in Patent Literatures 1 and 2. In each of the methods, dry gas in a large amount is sprayed in order to sufficiently dry sample droplets, thereby improving the efficiency of the gasification.

As described in Patent Literature 3, there is a method of removing large droplets causing degradation in the accuracy of analysis from the droplets sprayed from an ion source sprayer. In this method, a centrifugal separation chamber is provided on the downstream side of the ion source sprayer in order to select particle size of sprayed droplets, and small droplets are separated from large droplets by centrifugal force.

Since the large droplets are removed the accuracy of analysis can be improved; however, the ionic strength will decrease. In order to ensure the ionic strength with higher sensitivity, it is necessary to efficiently gasify a solvent of large droplets.

### Citation List

### Patent Literatures

PTL 1: Japanese Patent Application Laid-Open No. 2003-83938
PTL 2: US PATENT NO. 6759650
PTL 3: Japanese Patent Application Laid-Open No. 2000-214149

### Summary of Invention

### Technical Problem

For a connection to a liquid chromatograph in a liquid chromatograph mass spectrometer, a flow rate of a mobile phase solvent that is generally used by the liquid chromatograph is in a range of several hundreds of µL/min to several mL/min. When the sample solvent sent at the flow rate is sprayed, it is difficult to gasify all the sprayed sample solvent to generate ions.

In order to improve the efficiency of gasification of droplets of a sample solution sprayed at a high flow rate, there is a method for spraying dry gas such as N2 to sample droplets so as to promote the gasification of the sprayed sample solution. In this case, in order to sufficiently gasify the droplets generated by the spraying from the sample solution, it is important to sufficiently stir the droplets and the dry gas such as N2.

As examples, there are two methods: the first one for spraying a sample in the manner in which the sample sprayer of the ionizer has the same axis as the inlet for dry gas. The second one in which the sample sprayer of the ionizer has the axis crossing the axis of the inlet for dry gas, as described in Patent Literatures 1 and 2. In each of the methods, it is necessary to spray dry gas in a large amount in order to sufficiently dry sample droplets. It also has a problem that the ionic strength decreases due to dilution caused by the dry gas with the large amount in the concentration of the gasified sample and a reduction in the efficiency of introducing the sample into a mass spectrometer.

There are problems with droplets that are contained in a sample solution, have large particle diameters, and are not sufficiently gasified. The first problem is that when such droplets with large particle diameters contained in the sample solution are directly sprayed into a sample introducing unit of a mass spectrometer, the temperature of the sample introducing unit decreases; a desolvation effect is reduced in the sample introducing unit; and the sensitivity of the mass spectrometer decreases.

The second problem is that when such droplets with large particle diameters contained in the sample solution are introduced into the mass spectrometer and reaches a detector, the droplets cause noise of the detector and consequently cause a decrease in the sensitivity. In addition, when the droplets with large particle diameters are intermittently introduced into the sample introducing unit and the mass spectrometer, the droplets may cause dirt in the mass spectrometer and eventually cause a decrease in the sensitivity of the mass spectrometer in many cases.

To avoid the problems, when an ion source performs ionization with spraying a sample solution at a high flow rate is used, a central axis of the sample introducing unit is shifted from an axis of a sprayer of the ion source so that sample droplets that have large particle diameters and are not sufficiently gasified are not sprayed into the sample introducing unit of the mass spectrometer as one of many cases. Another case is the sprayer that is included in the ionizer and sprays the sample solution is arranged perpendicularly to the sample introducing unit, and the sample is sprayed in such a manner that droplets that have large particle diameters are not directly sprayed to the sample introducing unit.

A problem with the aforementioned arrangement is that since the sprayer of the ionizer is farther compared with the case where the sample is sprayed from a front surface of the sample introducing unit, the efficiency of introducing large droplets causing noise can be reduced. However, the efficiency of introducing sample ions into the mass spectrometer also decreases, resulting in a reduction in the ionic strength.

An object of the present invention is to provide a liquid chromatograph mass spectrometer that uses, for example, an electro spray ion source using electrospray ionization (ESI) and an atmospheric pressure chemical ionization source using atmospheric pressure chemical ionization (APCI) to efficiently gasify a sprayed sample solution, thereby generating fine charged droplets and improving the efficiency of ionization of the sample so as to have high ionic strength and high detection sensitivity.

### Solution to Problem

The present invention includes: liquid chromatograph separating means that separates a sample solution into components; a sample sprayer that sprays as droplets the sample solution separated and eluted by the liquid chromatograph separating means; ion generating means that charges the droplets and generates ions; a mass spectrometer that receives the ions and performs mass spectrometry on the ions; and a desolvation unit that removes a solvent contained in the charged droplets, wherein the desolvation unit includes a desolvation flow path chamber through which the charged droplets pass, heating means for heating the desolvation flow path chamber, and a helical droplet flow path formed in the desolvation flow path chamber.

The present invention also includes: liquid chromatograph separating means that separates a sample solution into components; a sample sprayer that sprays as droplets the sample solution separated and eluted by the liquid chromatograph separating means; ion generating means that charges the droplets and generates ions; a mass spectrometer that receives the ions and performs mass spectrometry on the ions; and a desolvation unit that removes a solvent contained in the charged droplets, wherein the desolvation unit includes a desolvation flow path chamber through which the charged droplets pass, heating means for heating the desolvation flow path chamber, and a helical droplet flow path formed in the desolvation flow path chamber, and wherein the solvent is removed by the desolvation unit before the droplets are charged by the ion generating means.

### Advantageous Effects of Invention

According to the present invention, a desolvation unit that removes a solvent contained in charged droplets includes a desolvation flow path chamber through which the charged droplets pass, heating means for heating the desolvation flow path chamber, and a helical droplet flow path provided in the desolvation flow path chamber. The charged droplets are guided to the helical droplet flow path, and then repeatedly spirally flow in the desolvation flow path chamber to be heated. Then, a medium solution vaporizes so as to form fine charged droplets, which promotes ionization. Since the droplet flow path of the desolvation flow path chamber is helical, the droplet flow path provided in the desolvation flow path chamber can be significantly longer than a droplet flow path extending straight from an inlet to an outlet, and the droplets can be sufficiently heated in the long droplet flow path. Thus, a liquid chromatograph mass spectrometer that is small and performs ionization in a favorable manner can be provided.

In addition, according to the present invention, a desolvation unit that removes a solvent contained in droplets includes a desolvation flow path chamber through which the droplets pass, heating means for heating the desolvation flow path chamber, and a helical droplet flow path provided in the desolvation flow path chamber, and the solvent is removed by the desolvation unit before ion generating means charge the droplets. Before the charging, the droplets are guided to the helical droplet flow path and repeatedly spirally flow in the desolvation flow path chamber to be heated. Then, a medium solution vaporizes so as to form fine charged droplets, which promotes ionization performed by the ion generating means. Since the droplet flow path of the desolvation flow path chamber is helical, the droplet flow path provided in the desolvation flow path chamber can be significantly longer than a droplet flow path extending straight from an inlet to an outlet, and the droplets can be sufficiently heated in the long droplet flow path. Thus, a liquid chromatograph mass spectrometer that is small and performs ionization in a favorable manner can be provided.

### Brief Description of Drawings

Fig. 1 is a diagram illustrating an outline configuration of a liquid chromatograph mass spectrometer that has an inverted cone-shaped desolvation flow path chamber formed in a first pore member according to an embodiment of the present invention.
Fig. 2 is an enlarged diagram illustrating the inverted cone-shaped desolvation flow path chamber according to the embodiment of the present invention.
Fig. 3 is a diagram illustrating an outline configuration of a mass spectrometer that has an inverted cone-shaped desolvation flow path chamber located immediately on the downstream side of a sample sprayer according to another embodiment of the present invention.
Fig. 4 is a partially enlarged cross-sectional view of the desolvation flow path chamber and illustrates a helical droplet flow path according to the embodiment of the present invention.

### Description of Embodiments

Hereinafter, embodiments of the present invention are described with reference to the accompanying drawings.

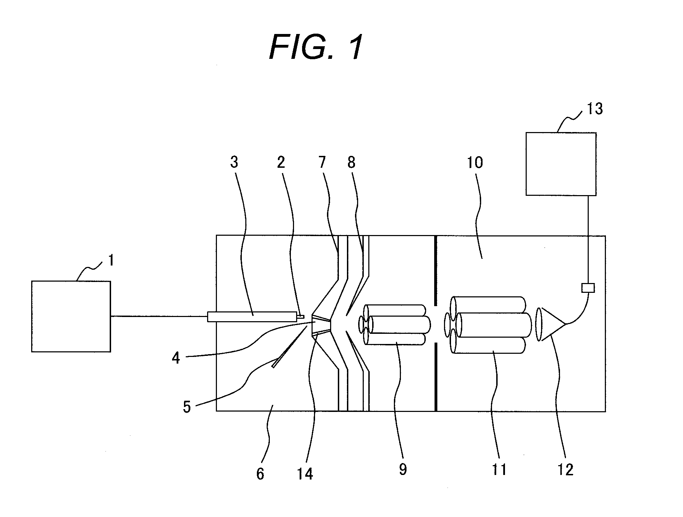

First, a liquid chromatograph mass spectrometer illustrated in Fig. 1 is described with reference to Figs. 1, 2, and 4.

The liquid chromatograph 1 includes a pump, an auto sampler, a column open, and an UV detector. A sample solution eluted from the liquid chromatograph 1 is supplied to a mass spectrometer which then performs mass spectrometry on the sample solution. The mass spectrometer includes an ionizer 6 (ion generating means), an ion guide 9, and a mass spectrometry unit 10.

In addition, the mass spectrometer includes a sample sprayer 2 for spraying a sample of an ion source, a heated gas supplier 3, a first pore member 7 provided with a first pore, a desolvation unit 14 provided with an inverted cone-shaped desolvation flow path chamber 4, a needle electrode 5 serving as the ion generating means, a second pore member 8 provided with a second pore, a quadrupole mass spectrometer 11, an ion detector 12, and a data processor 13.

A spray outlet of the sample sprayer 2 and a spray outlet of the heated gas supplier 3 are close to and face an inlet of the desolvation flow path chamber 4. The needle electrode 5 is provided in such a manner that an edge of the needle electrode 5 is close to a central portion of the inlet of the desolvation flow path chamber 4. The diameter of the inlet of the desolvation flow path chamber 4 is in a range of approximately 2 mm to 4 mm while the diameter of an outlet of the desolvation flow path chamber 4 is approximately 0.3 mm. In the inverted cone-shaped desolvation flow path chamber 4 of which the diameter is smaller toward the outlet from the inlet, charged droplets flow from the inlet to the outlet.

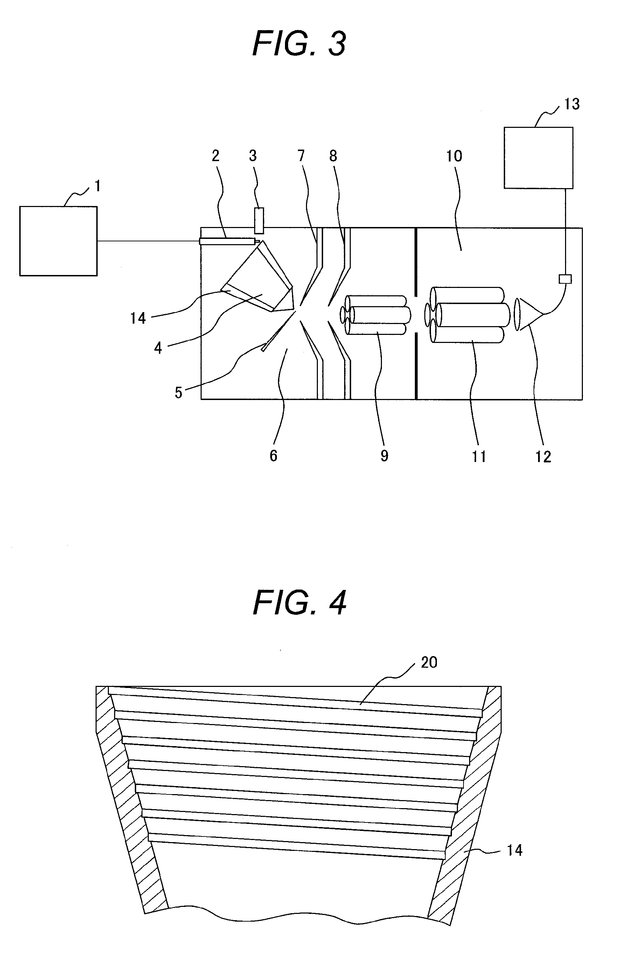

The desolvation unit 14 provided with the desolvation flow path chamber 4 has heating means (not illustrated) such as a heater, and the charged droplets are heated while flowing in the desolvation flow path chamber 4. A helical droplet flow path 20 illustrated in Fig. 4 is provided in an inner circumferential surface of the desolvation flow path chamber 4. The helical droplet flow path 20 is formed by a groove that continuously extends from the inlet of the desolvation flow path chamber 4 to the outlet of the desolvation flow path chamber 4. Instead of the groove, a protrusion or rib protruding on the inner circumferential surface of the desolvation flow path chamber 4 may form the helical droplet flow path 20.

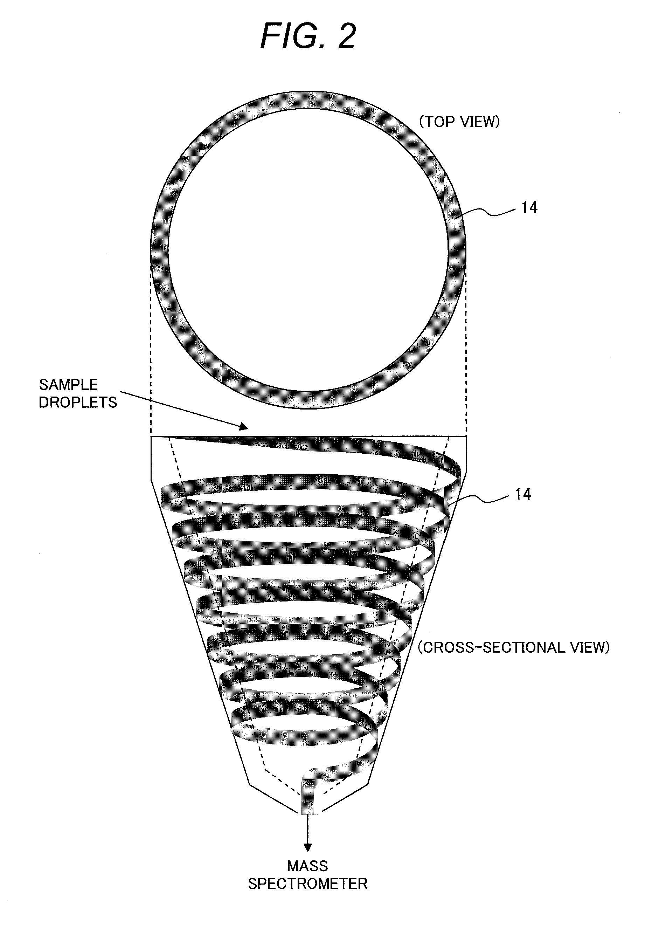

Droplets that are sprayed from the sample sprayer 2 are guided to the helical droplet flow path 20 and spirally flow from the inlet to the outlet as illustrated in Fig. 2. The spray outlet of the sample sprayer 2 and the spray outlet of the heated gas supplier 3 face an inlet-side edge of the droplet flow path 20 (groove) and are arranged so as to match a tangential direction of a circular arc of the groove, and thus, the spiral flow of the droplets in the groove is smooth.

The droplet flow path 20 (groove) spirally extends from the inlet of the desolvation flow path chamber 4 to the outlet of the desolvation flow path chamber 4. Thus, the droplet flow path provided in the desolvation flow path chamber can be significantly longer than a flow path extending straight from an inlet to outlet of a desolvation flow path chamber, and the droplets can be sufficiently heated in the long droplet flow path. Thus, the liquid chromatograph mass spectrometer that is small and can perform ionization in a favorable manner can be provided.

The outline of operations of the liquid chromatograph mass spectrometer is described below.

A mixed sample is separated into a single component by the liquid chromatogram 1 and eluted at a flow rate of several hundreds of µL/min to several mL/min. The sample solution eluted from the liquid chromatograph 1 is introduced into the sample sprayer 2 provided in the ionizer 6 of the liquid chromatograph mass spectrometer. In this case, when an electro spray ion source that uses electrospray ionization as illustrated in Fig. 1 is used, the ion generating means applies a high voltage to the spray outlet of the sample sprayer 2 and generates ions.

The heated gas supplier 3 that supplies gas in order to dry the sample droplets sprayed from the sample sprayer 2 may be arranged immediately on the downstream side of the sample sprayer 2. The inverted cone-shaped desolvation flow path chamber 4 heated to a certain temperature in order to promote stirring of the sprayed sample droplets and the heated gas and gasification of the sample droplets is arranged in a central portion of the first pore member 7 that is a sample introducing unit. The sample component sprayed from the sample sprayer 2 passes through the first pore of the first pore member 7, the second pore of the second pore member 8, and the ion guide 9 and is transported as ions into the mass spectrometry unit 10.

The ions are mass-separated by the quadrupole mass spectrometer 11. The separated ions are detected by the ion detector 12 and are displayed by the data processor 13 as a mass spectrum and mass chromatographic data.

The first pore of the first pore member 7 and the second pore of the second pore member 8 each have a diameter of approximately 0.4 mm. In a region A located between the first pore member 7 and the second pore member 8, a region B in which the ion guide 9 is arranged, and a region C in which the mass spectrometry unit is arranged, degrees of vacuum are maintained. The degree of vacuum in the region C is higher than the degree of vacuum in the region B while the degree of vacuum in the region B is higher than the degree of vacuum in the region A. In a region D in which the ionizer 6 (ion generating means) is arranged, atmospheric pressure is maintained. In the regions C, B, and A, a vacuum pump is connected and maintains a vacuum by emission. The diameter of the first pore of the first pore member 7 and the diameter of the second pore of the second pore member 8 are set to approximately 0.4 mm in order to maintain the vacuum.

A voltage of several tens of volts is applied between the first pore member 7 and the second pore member 8, while a voltage of several tens of volts is applied between a partition member of the regions C and B and the second pore member 8. A voltage of several kV is applied between the sample sprayer 2 and the first pore member 7. The ions that are generated by the ion generating means are attracted by potential differences between the applied voltages and pass through the first pore of the first pore member 7, the second pore of the second pore member 8, and the ion guide 9 and flow to the downstream-side mass spectrometry unit 10. Since droplets and flowing gas that are not charged are not attracted by the potential difference and are eluted by the vacuum pump.

As described above, the droplet flow path 20 (groove) spirally extends from the inlet of the desolvation flow path chamber 4 to the outlet of the desolvation flow path chamber 4. Thus, the droplet flow path provided in the desolvation flow path chamber can be significantly longer than a flow path that extending straight from an inlet to outlet of a desolvation flow path chamber, and the droplets can be sufficiently heated in the long droplet flow path. Thus, the charged droplets become fine droplets due to vaporization of a solvent and are eventually ionized. Since the amount of unionized droplets contained in a sample component to be analyzed by the mass spectrometry unit 10 can be reduced, noise for the analysis decreases, thereby improving the accuracy of the mass spectrometry.

The desolvation flow path chamber of the desolvation unit is described below.

Fig. 2 is a structure diagram of the inverted cone-shaped desolvation flow path chamber formed in the central portion of the first pore member 7 illustrated in Fig. 1. While an upper diagram is a top view, a lower diagram is a cross-sectional view. In the top view, a void indicated by a hatched line is provided, and the charged sample droplets sprayed by the sample sprayer 2 are introduced into the void. The first pore member 7 is made of a thick material, and the inverted cone-shaped desolvation flow path chamber is provided using the thickness of the first pore member 7. The charged sample droplets that are introduced from the inlet into the inverted cone-shaped desolvation flow path chamber 4 flows as a gas stream toward a corner (outlet side) of the inverted cone-shaped flow path chamber along the helically processed groove indicated in white in the cross-sectional view.

The charged droplets flowing as the gas stream are heated to a certain temperature by the heating unit provided in the desolvation unit 14 that has the inverted cone-shaped desolvation flow path chamber 4. Since the desolvation flow path chamber 4 has the helical droplet flow path, the flow path is significantly longer than a flow path extending straight from an inlet to outlet of a desolvation flow path chamber. The charged droplets are sufficiently heated while flowing in the long droplet flow path, a liquid solvent component contained in the charged droplets is gasified, and the fine droplets are formed to be eventually ionized. Since N2, for example, that is heated and supplied by the heated gas supplier 4 immediately after the sample sprayer 2 sprays the sample solution is simultaneously introduced into the inverted cone-shaped desolvation flow path chamber 4, resulting in stirring effect of the sample droplets and the heated gas in addition to promoting effect of the gasification.

As described above, the inverted cone-shaped desolvation flow path chamber 4 forms a block that is heated to the certain temperature. The inverted cone-shaped desolvation flow path chamber 4 has a structure in which the sprayed gas component spirally flows to the corner of the inverted cone-shaped desolvation flow path chamber in the groove formed in an inner surface of the desolvation flow path chamber 4. Since the flow path is long, a time period in which the flowing gas component contacts a heated surface of the helical droplet flow path formed in the inner surface of the inverted cone-shaped desolvation flow path chamber increases, thereby improving a desolvation effect during the flow of the gas component.

As the heating unit of the inverted cone-shaped desolvation flow path chamber 4, heating means such as a heater and PTC may be used. In addition, the sample solution with a large amount can be sprayed into the inverted cone-shaped desolvation flow path chamber 4 to promote the gasification by the heating and stirring in the constant void. This leads to an increase in the concentration of fine droplets toward the corner of the inverted cone-shaped desolvation flow path chamber. Thus, the fine droplets can be transported to the downstream side of the second pore member 8. For this reason, a transmission rate of ions can be improved, introduction of large droplets that cause a noise component of the detector 12 can be suppressed, and the ionic strength and the accuracy of analysis can be higher.

In the liquid chromatograph mass spectrometer, the electro spray ion source that uses the electrospray ionization (ESI) or the atmospheric pressure chemical ionization source that uses the atmospheric pressure chemical ionization (APCI) is used. A pore inner portion of the first pore into which charged droplets are introduced is the inverted cone-shaped desolvation flow path chamber provided to efficiently desolvate charged droplets sprayed from the ion source (ion generating means for example) in the first pore provided in the central portion of the first pore member. The discharge port located at the corner of the inverted cone-shaped desolvation flow path chamber is provided to face the second pore.

In addition, the block of the desolvation unit that has formed therein the inverted cone-shaped desolvation flow path chamber is the block heated to the certain temperature. The heated block has the helical groove in order to cause the sprayed sample droplets and the dry gas such as N2 to be sufficiently stirred and sufficiently contact the inner surface of the heated block and promote the gasification, which generates fine charged droplets efficiently during the time when the droplets pass through the heated block. The efficiently generated ions are introduced into the mass spectrometry unit. The desolvation unit is provided in the first pore member. Thus, the liquid chromatograph mass spectrometer can be downsized compared with a liquid chromatograph mass spectrometer in which a desolvation unit is separated from a first pore member. In addition, the inverted cone-shaped desolvation flow path chamber is formed in the desolvation unit, and the discharge port that serves as the first pore and has a diameter (of 0.4 mm) is provided on the opposite side of the inlet. Thus, the vacuum degree of the region A at the discharge port (outlet side) of the desolvation flow path chamber can be maintained. Since the discharge port of the desolvation flow path chamber also serves as the first pore, the structure is simple.

For the atmospheric pressure chemical ionization (APCI) source that uses the atmospheric pressure chemical ionization, the needle electrode is provided in the vicinity of the discharge port located at the corner of the inverted cone-shaped desolvation flow path chamber. The mass spectrometer that ionizes only efficiently generated fine droplets by chemical reactions is provided.

Next, the other embodiment is described with reference to Fig. 3.

The embodiment illustrated in Fig. 3 is different from the aforementioned embodiment illustrated in Fig. 1 in that the needle electrode 5 of the ionizer 6 (ion generating means) is arranged on the side of the outlet of the desolvation flow path chamber 4 of the desolvation unit 14 in the embodiment illustrated in Fig. 3. In addition, the embodiment illustrated in Fig. 3 is different from the aforementioned embodiment illustrated in Fig. 1 in that the desolvation flow path chamber 4 of the desolvation unit 14 is placed tilted and the sample sprayer 2 is separated from the gas supplier 3 in the embodiment illustrated in Fig. 3.

The desolvation unit 14 that has the inverted cone-shaped desolvation flow path chamber 4 has the same configuration as the embodiment illustrated in Fig. 1. The desolvation flow path chamber 4 has the helical droplet flow path 20 (groove) therein, and sample droplets are spirally transported by the droplet flow path 20 (groove). The inverted cone-shaped desolvation flow path chamber 4 has the heating unit such as a heater and is heated to the certain temperature. The gasification of the sample droplets is promoted by the heating and stirring during the time when the sample droplets pass through the helical groove heated to the high temperature, and fine droplets are generated. Ions of the generated fine droplets are efficiently transported from the corner (outlet side) of the inverted cone-shaped desolvation flow path chamber to the mass spectrometry unit by a potential difference between the first pore member and the second pore member.

Regarding the heating of the inverted cone-shaped desolvation flow path chamber 4, (heating means such as a heater may be used in the same manner as the first pore member 7, the gas heated to a high temperature such as N2 supplied by the heated gas supplier 4 may be used for heating), a sprayed sample solution with a large amount is introduced into the inverted cone-shaped desolvation flow path chamber 4, the gasification is promoted by the heating and the stirring in the certain void, and the concentration of fine droplets increases toward the corner (outlet side) of the inverted cone-shaped desolvation flow path chamber. Thus, when the atmospheric pressure chemical ionization source that uses the atmospheric pressure chemical ionization is used, diffusion of sample droplets can be suppressed, and ions can be efficiently generated compared with the case where the ionization is performed by the needle electrode 5 after the spraying by the sample sprayer 2 (in the embodiment illustrated in Fig. 1). In case of use of the atmospheric pressure chemical ionization, the ionization is expected to improve when the ionization is performed after heating of the solvent supplied from the liquid chromatograph (LC) in the desolvation flow path chamber 4 and promoting of the gasification.

The block of the desolvation unit having the desolvation flow path chamber formed therein is not provided in the first pore member and is arranged immediately on the downstream side of the sample sprayer. The gasification is promoted by the heating performed by the heating means provided in the block before the sample droplets are introduced into the first pore of the first pore member. Droplets that have small particle diameters due to desolvation caused by gasification are favorably ionized by the needle electrode (ion generating means) located in the vicinity of the discharge port located at the corner of the desolvation flow path chamber. For the ionization, the atmospheric pressure chemical ionization (APCI) source that uses the atmospheric pressure chemical ionization is used in the same manner as the embodiment illustrated in Fig. 1. Since the block of the desolvation unit is separated from the first pore member, unlike the embodiment illustrated in Fig. 1, the arrangement of the block of the desolvation unit can be arbitrarily selected. In addition, since the block of the desolvation unit does not use the first pore member, the block is not limited by the thickness of the first pore member and can have a size required for the heating and the gasification.

## Claims

1. A liquid chromatograph mass spectrometer comprising:
liquid chromatograph separating means that separates a sample solution into components;
a sample sprayer that sprays as droplets the sample solution separated and eluted by the liquid chromatograph separating means;
ion generating means that charges the droplets and generates ions;
a mass spectrometer that receives the ions and performs mass spectrometry on the ions; and
a desolvation unit that removes a solvent contained in the charged droplets, wherein
the desolvation unit includes a desolvation flow path chamber through which the charged droplets pass, heating means for heating the desolvation flow path chamber, and a helical droplet flow path formed in the desolvation flow path chamber.

2. A liquid chromatograph mass spectrometer comprising:
liquid chromatograph separating means that separates a sample solution into components;
a sample sprayer that sprays, as droplets, the sample solution separated and eluted by the liquid chromatograph separating means;
ion generating means that charges the droplets and generates ions;
a mass spectrometer that receives the ions and performs mass spectrometry on the ions; and
a desolvation unit that removes a solvent contained in the droplets, wherein
the desolvation unit includes a desolvation flow path chamber through which the droplets pass, heating means for heating the desolvation flow path chamber, and a droplet flow path formed in the desolvation flow path chamber, and wherein
the solvent is removed by the desolvation unit before the droplets are charged by the ion generating means.

3. The liquid chromatograph mass spectrometer according to claim 1,
wherein the diameter of the helical droplet flow path is smaller toward an outlet of the desolvation flow path chamber from an inlet of the desolvation flow path chamber.

4. The liquid chromatograph mass spectrometer according to claim 2,
wherein the diameter of the helical droplet flow path is smaller toward an outlet of the desolvation flow path chamber from an inlet of the desolvation flow path chamber, and an edge of a needle electrode of the ion generating means is located at a central portion of the outlet.

5. The liquid chromatograph mass spectrometer according to claim 1,
wherein the desolvation flow path chamber is formed in a cone shape in such a manner that the diameter of the desolvation flow path chamber is smaller toward the outlet from the inlet, and the helical droplet flow path is formed along an inner surface of the desolvation flow path chamber.

6. The liquid chromatograph mass spectrometer according to claim 1,
wherein the desolvation unit is located on a downstream side of the ion generating means.

7. The liquid chromatograph mass spectrometer according to claim 2,
wherein the desolvation unit is located on an upstream side of the ion generating means.
